# FASCICULE DE BREVET EUROPEEN

(11) **EP 2 310 734 B1**
(45) Date de publication et mention de la délivrance du brevet: **21.11.2012**
(21) Numéro de dépôt: 09784512.7
(22) Date de dépôt: 10.07.2009
(51) Int. Cl.: F16L 33/04, F16L 21/06, F16L 23/04

(54) **DISPOSITIF DE SERRAGE COMPRENANT UN COLLIER**
SPANNVORRICHTUNG MIT KLEMMSCHELLE
TIGHTENING DEVICE WITH COLLAR

(30) Priorité: 10.07.2008 FR 0854699
(43) Date de publication de la demande: 20.04.2011
(73) Titulaire: Etablissements Caillau, 92130 Issy-les-Moulineaux (FR)
(72) Inventeur: PREVOT, Fabrice, F-41130 Selles Sur Cher (FR); FOUQUERAY, Cyriaque, F-41200 Romorantin (FR); GAPTEAU, Mickaël, F-41200 Villefranche sur Cher (FR)
(74) Mandataire: Intès, Didier Gérard André
(86) Numéro de dépôt international: PCT/FR2009/051390
(87) Numéro de publication internationale: WO 2010/004233

(56) Documents cités:
- WO-A-2006/109001
- FR-A- 2 559 220

## Description

La présente invention concerne un dispositif de serrage comprenant un collier susceptible d'être placé autour d'objets à serrer, le collier présentant une ceinture métallique sensiblement cylindrique, au moins une paire d'oreilles qui sont en saillie par rapport à cette ceinture et qui délimitent un espace de serrage entre leurs parties avant respectives, et au moins une tige de serrage et deux organes de serrage coopérant avec ladite tige et, respectivement, avec des parties d'appui des deux oreilles de la paire, pour pouvoir rapprocher ces oreilles de manière à provoquer le serrage de la ceinture par une diminution du diamètre de cette dernière, au moins l'une des oreilles de la paire étant une oreille à prolongement, la partie d'appui de cette oreille étant formée dans un prolongement de ladite oreille, qui est replié vers l'arrière de cette dernière, à l'opposé de l'autre oreille de la paire, et qui présente un perçage pour la tige de serrage situé en regard d'un perçage de la partie avant de la même oreille, un espace d'entretoisement étant ménagé entre le prolongement replié et ladite partie avant.

Un collier de serrage de ce type est connu, par exemple par la demande de brevet PCT WO 2006/109001. Pour le serrage, la ceinture du collier est disposée autour du ou des objets à serrer et les oreilles, qui forment des lèvres relevées par rapport à cette ceinture, sont rapprochées l'une de l'autre pour diminuer la largeur de l'espace de serrage (en forme de fente longitudinale) qui existe entre elles, de manière à réduire le diamètre de la ceinture. Comme indiqué dans la demande PCT WO 2006/109001, le fait d'exercer des efforts de serrage sur le prolongement qui est replié vers l'arrière de l'oreille à prolongement permet de mieux répartir les efforts de serrage sur cette oreille.

Ainsi, le collier décrit dans la demande WO 2006/109001 donne globalement satisfaction. La société demanderesse s'est toutefois aperçue que, pour certaines applications nécessitant en particulier des efforts de serrage élevés, le guidage de la tige de serrage dans les perçages de l'oreille à prolongement peut s'avérer insuffisant. En fait, pour des raisons d'économie, on a tendance à réaliser les ceintures de tels colliers dans des feuillards d'épaisseur de plus en plus faible. Il en résulte, lorsque la tige de serrage est une tige filetée, que les filets risquent de se prendre dans les bords des perçages de serrage, ce qui provoque une diminution du rendement de serrage du collier (ce rendement étant le rapport entre le couple appliqué aux organes de serrage et le couple de serrage effectivement obtenu) et endommage cette tige filetée.

De plus, si la tige de serrage n'est supportée que par le bord des perçages dont l'épaisseur correspond à celle du feuillard dans lequel est réalisée la ceinture, ce support s'exerce sur une longueur qui peut être insuffisante, ce qui risque de conduire à un flambement de cette tige lors du serrage du collier, en particulier lorsque les efforts de serrage sont élevés.

Pour remédier à ces inconvénients, la figure 16 de WO 2006/109001 suggère de border les perçages par des collets cylindriques qui s'étendent dans l'espace d'entretoisement.

Toutefois, la matière utilisée pour réaliser ces collets, en particulier par emboutissage, est prise dans le reste de l'oreille, et la réalisation de ces collets occasionne des efforts d'écrouissage très importants, affectant tout le pourtour des perçages, ce qui peut finalement affaiblir cette oreille. Au total, il existe un risque que de tels collets cylindriques "consomment" trop de matière et correspondent à des affaiblissements locaux.

L'invention vise à améliorer encore cet état de la technique en proposant une solution permettant d'améliorer le support de la tige de serrage dans les perçages de serrage de l'oreille à prolongement, qui soit sensiblement exempte des inconvénients précités.

Ce but est atteint grâce au fait que les perçages du prolongement et de la partie avant présentent chacun une portion de bord ayant une visière qui s'étend dans l'espace d'entretoisement et une portion de bord dépourvue de visière, qui s'étend en regard de la visière de l'autre perçage.

Ainsi, selon l'invention, les visières qui s'étendent chacune seulement sur une portion de bord des perçages du prolongement améliorent le support de la tige de serrage dans ces perçages. En effet, ces visières offrent à la tige de serrage des surfaces de contact plus importantes que des perçages dont l'épaisseur du bord serait seulement celle du feuillard. Les contraintes de contact entre la tige de serrage et les perçages sont ainsi réparties sur ces surfaces de contact augmentées. Les deux visières sont décalées angulairement l'une par rapport à l'autre, c'est-à-dire qu'elles sont disposées "en quinconce". Il en résulte que la vis est parfaitement supportée tout en ayant une capacité à légèrement se déplacer par basculement lors du serrage. L'une des visières retient la vis vis-à-vis de son déplacement dans un premier sens, tandis que l'autre visière retient la vis vis-à-vis d'un déplacement dans un autre sens sensiblement opposé au premier. En réalisant seulement ces visières, on utilise très peu de matière, de sorte qu'on n'affaiblit pas notablement l'oreille à prolongement dans la région des perçages de serrage. De plus, la réalisation de chaque visière n'occasionne que de faibles efforts d'écrouissage (ou, en tout cas, des efforts localisés) puisque la visière s'étend sur une partie seulement du pourtour du perçage de serrage, de sorte qu'on évite les risques d'un écrouissage excessif autour des perçages, pouvant conduire à des ruptures.

Avantageusement, les visières sont des portions repliées des bords des perçages.

Le fait de réaliser des visières par un simple repli des portions correspondantes des bords des perçages est une manière extrêmement simple de les former sans, comme indiqué ci-dessus, occasionner des efforts d'écrouissage trop importants.

Avantageusement, la visière du perçage du prolongement est plus proche de l'axe de la ceinture que la visière du perçage de la partie avant.

Lors du serrage, l'oreille à prolongement peut avoir légèrement tendance à s'incliner vers l'axe du collier par un basculement autour de son point de rattachement à la ceinture. En d'autres termes, dans ce cas, la partie avant de l'oreille a tendance à se rapprocher de l'axe du collier, tandis que la base de la partie arrière, formée par le prolongement, a légèrement tendance à s'écarter de cet axe. Il existe aussi un risque que l'oreille se déroule, c'est-à-dire que le prolongement de l'oreille ait tendance à se déplier sous l'effet des efforts de serrage. Le fait de disposer les visières comme indiqué ci-dessus permet de limiter un tel basculement et un tel déroulement grâce au support réalisé pour la tige de serrage.

Avantageusement, l'autre oreille de la paire est également une oreille à prolongement, la partie d'appui de cette oreille étant formée dans un prolongement de ladite oreille, qui est replié vers l'arrière de cette dernière, à l'opposé de l'autre oreille de la paire, et qui présente un perçage pour la tige de serrage situé en regard d'un perçage de la partie avant de la même oreille, un espace d'entretoisement étant ménagé entre le prolongement replié et ladite partie avant.

Un autre aspect de l'invention est applicable à un dispositif de serrage comprenant un collier susceptible d'être placé autour d'objets à serrer, le collier présentant une ceinture métallique sensiblement cylindrique, au moins une paire d'oreilles qui sont en saillie par rapport à cette ceinture et qui délimitent un espace de serrage entre leurs parties avant respectives, et au moins une tige de serrage et deux organes de serrage coopérant avec ladite tige et, respectivement, avec des parties d'appui des deux oreilles de la paire, pour pouvoir rapprocher ces oreilles de manière à provoquer le serrage de la ceinture par une diminution du diamètre de cette dernière.

Selon cet autre aspect, à l'état non serré du collier, la largeur de l'espace de serrage, mesurée selon la direction longitudinale de la tige de serrage, est plus grande autour de cette tige que dans des régions des oreilles éloignées de la tige de serrage sur au moins sensiblement toute la hauteur de la tige de serrage mesurée perpendiculairement à l'axe de la ceinture et à la direction longitudinale de ladite tige.

La demanderesse a remarqué que, en particulier pour des colliers à bande large (la largeur étant mesurée dans le sens de l'axe de la ceinture cylindrique), il existe un risque que les efforts de serrage se répartissent mal sur la largeur de la bande, c'est-à-dire selon la longueur de l'espace de serrage. Pour pallier ce risque, il est possible de prévoir que le collier ait plusieurs paires d'oreilles régulièrement réparties sur cette largeur. Cette solution présente l'inconvénient d'augmenter les coûts de fabrication puisqu'il faut prévoir un équipement de serrage pour chaque oreille.

Ce défaut de répartition des efforts de serrage est dû au fait que ces efforts s'exercent en premier lieu dans la région qui se trouve autour de la tige de serrage, tandis que les efforts sont moins importants dans les régions éloignées de cette tige. La demanderesse a remarqué que, en réalisant les oreilles de telle sorte que la largeur de l'espace de serrage soit plus grande autour de la tige que dans les régions des oreilles éloignées de cette tige, la répartition des efforts de serrage est améliorée.

Classiquement, ces efforts conduisent à rapprocher davantage l'une de l'autre les régions des oreilles proches de la tige que les régions éloignées de cette tige. Ainsi, si les bords des oreilles sont initialement rectilignes, le serrage affecte en premier lieu les régions proches de la tige, qui ont tendance à « tirer » avec elles les régions les plus éloignées. Au final, les régions des oreilles éloignées de la tige de serrage se rapprochent moins l'une de l'autre que les régions proches de cette tige. Dans ces régions éloignées, la largeur de l'espace de serrage est donc plus grande que celle qui était souhaitée.

Selon cet aspect de l'invention, la largeur de l'espace de serrage est initialement plus faible dans les régions éloignées de la tige de serrage que dans les régions proches de cette tige. Cette différence initiale compense l'effet précité, pour permettre d'obtenir, après serrage, un espace résiduel entre les oreilles dont la largeur est limitée, sur toute la longueur des oreilles. De ce fait, la surface totale d'appui de la ceinture sur le ou les objets à serrer est augmentée et l'efficacité du serrage est accrue.

Cet aspect de l'invention procure également un autre effet très significatif. En effet, la conformation initiale particulière des oreilles qui augmente la largeur de l'espace de serrage dans la région de la tige de serrage provoque un effet de "clé de voûte". En d'autres termes, les régions des oreilles qui sont proches de la tige forment chacune la clé d'une voûte qui transmet aux régions adjacentes (éloignées des oreilles) les efforts de serrage qui s'exercent sur elle. En d'autres termes, les clés de voûte formées par ces régions des oreilles ont tendance, sous l'effet du serrage, à entraîner avec elles les régions adjacentes en les poussant plutôt qu'en les tirant. Il en résulte une meilleure répartition des efforts de serrage et, par conséquent, une meilleure efficacité du serrage.

Dans la définition du dispositif selon cet autre aspect de l'invention, "au moins sensiblement toute la hauteur de la tige de serrage" signifie sur plus de la moitié de cette tige et, de préférence, sur au moins 70 % de cette hauteur. En particulier, cette largeur accrue de l'espace de serrage peut même être constatée sur toute la hauteur de la tige, et même sur un peu plus de cette hauteur (110 % à 120 %, voire davantage).

Avantageusement, vue dans un plan parallèle à l'axe de la ceinture et passant par l'axe de la tige de serrage, chaque oreille de ladite paire présente, à l'état non serré de la ceinture, une forme concave dont la concavité est tournée vers l'autre oreille de la paire.

Cette forme générale concave permet de garantir l'efficacité de l'effet "clé de voûte" évoquée précédemment.

De préférence, il existe au moins un plan de concavité, parallèle à l'axe de la ceinture et à la direction longitudinale de la tige de serrage, dans lequel l'intersection d'une oreille de la paire avec ce plan coïncide sur la majeure partie de sa longueur avec une courbe de référence concave, dont le creux est situé dans la région de la tige de serrage.

Comme on le verra dans la suite, les parties des oreilles peuvent présenter des "accidents" par rapport à cette courbe de référence concave. En particulier, elles peuvent présenter localement des bossages ou des emboutissages ayant des fonctions particulières. Ceci étant, le fait qu'elles coïncident sur leur majeure partie avec les courbes de référence concaves permet d'éviter des points d'inflexion trop marqués et d'homogénéiser la répartition des efforts de serrage.

Avantageusement, les parties avant des deux oreilles de la paire présentent chacune une portion centrale, et deux portions latérales qui s'étendent sur au moins la hauteur de la tige de serrage, mesurée perpendiculairement à l'axe de la ceinture et à la direction longitudinale de ladite tige, et qui ont des formes telles que les portions latérales soient en avancée vers l'oreille opposée par rapport à la portion centrale au moins sur ladite hauteur de la tige de serrage.

Ainsi, l'effet "clé de voûte" évoqué précédemment s'exerce bien tout autour des zones directement concernées par le serrage, c'est-à-dire les zones qui s'étendent autour de la tige de serrage. Il est en particulier très important que les efforts de serrage soient bien répartis non seulement vers le point de rattachement des oreilles à la ceinture du collier, mais également à plus grande distance de cette ceinture, tout autour de la tige de serrage, même dans les régions éloignées du centre de la ceinture.

Avantageusement, le prolongement présente des ailes coopérant avec la face arrière de la partie avant de l'oreille prolongée, de part et d'autre du perçage de ladite partie avant.

Ces ailes permettent de former des entretoises évitant un écrasement de l'espace d'entretoisement qui pourrait se produire lors d'un rapprochement entre le prolongement replié vers l'arrière et la partie avant de l'oreille concernée.

Avantageusement, les ailes du prolongement sont retenues vis-à-vis de leur écartement relatif.

Le fait d'éviter l'écartement relatif des ailes du prolongement permet de s'assurer qu'elles jouent bien leur rôle d'entretoises.

Avantageusement, au moins une aile du prolongement est retenue vis-à-vis de son glissement contre la face arrière de l'oreille dans un plan sensiblement perpendiculaire à l'axe de la ceinture.

Dans ce cas, avantageusement, l'un des éléments constitués par le bord libre de l'aile retenue vis-à-vis de son glissement contre la face arrière de l'oreille dans un plan sensiblement perpendiculaire à l'axe de la ceinture et par la face arrière de la partie avant de l'oreille présente une encoche, tandis que l'autre élément présente une saillie engagée dans cette encoche.

On a indiqué précédemment que, quand les efforts de serrage sont particulièrement élevés, il existe un risque que les oreilles aient tendance à basculer par rapport à leur point de rattachement à la ceinture du collier et que la ou les oreilles à prolongement aient tendance à se dérouler par un dépliage du prolongement. On a également indiqué que la disposition préférentielle des visières de support, respectivement proches de l'axe de la ceinture pour la visière du perçage du prolongement et plus éloignée de cet axe pour la visière de la partie avant permet que, grâce à la coopération entre la tige de serrage et ces visières, cette tendance au basculement ou au déroulement soit efficacement contrariée.

Toutefois, il en résulte que des efforts élevés s'exercent sur la tige de serrage.

La société demanderesse a donc constaté qu'il est particulièrement astucieux que les ailes du prolongement, lorsqu'elles sont présentes, soient également utilisées pour contrarier cette tendance au basculement. En effet, en évitant leur glissement contre la face arrière des oreilles, elles obligent le prolongement arrière replié et la partie avant de l'oreille à rester sensiblement dans leurs positions initiales, même lors d'un serrage sous effort élevé et empêchent donc, en particulier, que la région du prolongement replié qui est la plus proche de l'axe ait tendance à légèrement se relever par rapport à cet axe.

Le fait de réaliser cette retenue anti-glissement par un ensemble à saillie et encoche du type précité est particulièrement peu coûteux.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre une vue en perspective d'un collier conforme à l'invention ;
- la figure 2 est une vue en coupe dans le plan II-II de la figure 1 ;
- la figure 3 est une vue de côté, selon la flèche III de la figure 1 ;
- la figure 4 est une vue de côté, selon la flèche IV de la figure 3 ;
- la figure 5A est une vue partielle en coupe dans le plan IV-IV de la figure 3 ;
- la figure 5B est une vue analogue à la figure 5A, pour une variante de réalisation ;
- la figure 6 montre, avant son enroulement, la bande dans laquelle sont réalisées la ceinture et les oreilles du collier ;
- la figure 7 montre la même bande que la figure 6, alors que les visières des perçages ont été formées, de même que les replis des prolongements et les ailes de ces derniers ont été emboutis ;
- la figure 8 est une vue de dessus du collier de la figure 1, à l'état non serré ;
- la figure 9 est une vue analogue à la figure 8, montrant le collier à l'état serré ;
- la figure 10 est une vue partielle, correspondant à la partie supérieure de la figure 3, alors que la vis de serrage n'est pas présente ;
- les figures 11A, 11B et 11C sont des vues en coupe dans les plans A, B et C, respectivement, montrant la conformation du collier avant le serrage ;
- les figures 12A, 12B et 12C sont des vues respectivement analogues aux figures 11A, 11B et 11C, alors que le collier est serré ; et
- la figure 13 montre, en perspective, un collier selon une variante de réalisation.

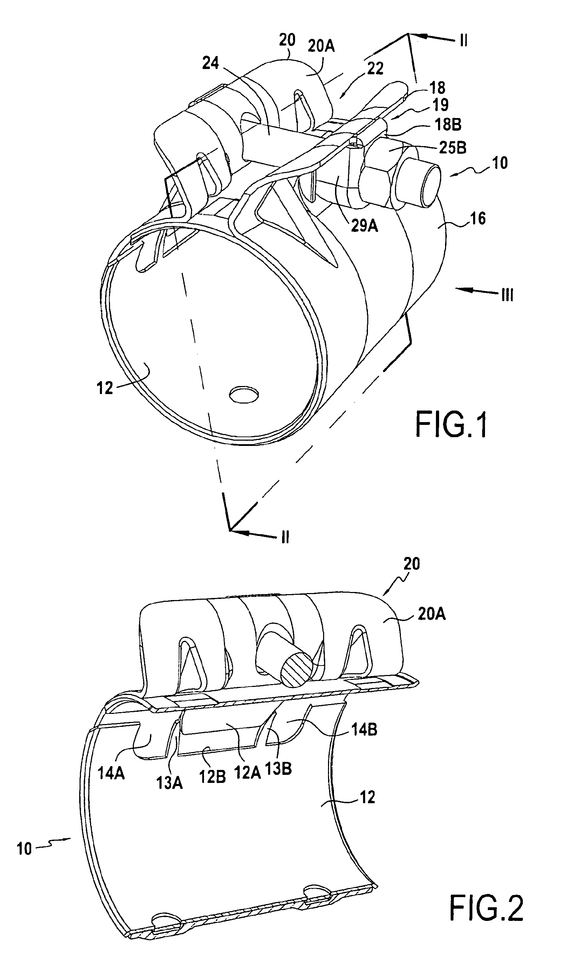

Le dispositif de serrage des figures 1 et 2 comprend un collier de serrage 10 à l'intérieur duquel est disposée une bague d'étanchéité 12 pour entourer les extrémités en regard de deux tubes lisses, accouplés de manière étanche à l'aide de ce dispositif. La bague d'étanchéité peut être réalisée de manière connue par la demande de brevet EP 1 181 477 ou par la demande WO 2006/109002. Par exemple, comme le montrent les figures 1 et 2, ses extrémités comportent respectivement une conformation mâle 12A et une conformation femelle 12B, qui reçoit la conformation mâle lors du serrage et qui est délimitée entre deux pattes de contact 13A et 13B. Le contact étanche se fait sur les bords de contact des pattes de contact 13A et 13B, qui peuvent être pliées lors du serrage pour favoriser la pénétration et la conformation mâle dans la conformation femelle. Des dégagements 14A et 14B favorisant ce pliage sont avantageusement ménagés sur les côtés des pattes 13A et 13B opposées à l'encoche 12B qui forme la conformation femelle.

L'exemple de réalisation représenté sur les figures 1 et 2 est particulièrement adapté au serrage des extrémités en regard de deux tubes lisses.

Toutefois, le dispositif de serrage de l'invention n'est pas limité à ce genre d'application. De manière générale, le collier est apte à serrer tout type d'objet de révolution. Il peut s'agir du serrage d'un tuyau sur un embout, ou bien encore du serrage de raccords de tube présentant des surfaces de serrage en saillie, sur lesquelles la ceinture du collier viendra prendre appui en ayant la conformation appropriée, par exemple une ceinture à section creuse ou en V.

Dans la présente demande de brevet, on s'intéresse à la conformation particulière des oreilles de serrage du collier. Le collier est réalisé à partir d'une bande de métal enroulée sur elle-même. Il présente une ceinture 16 qui, comme on le voit sur la figure 1, est sensiblement cylindrique. Ceci signifie que la périphérie interne de cette ceinture est disposée sur un cylindre, mais que, pour permettre le serrage, le cylindre formé par cette périphérie interne n'est pas fermé. En effet, le collier présente une paire d'oreilles 18 et 20 qui sont en saillie par rapport à la ceinture et qui délimitent entre elles un espace de serrage 22. Comme on le voit, les oreilles sont formées aux extrémités longitudinales de la bande dans laquelle est formé le collier, et elles sont relevées sensiblement radialement par rapport à la ceinture.

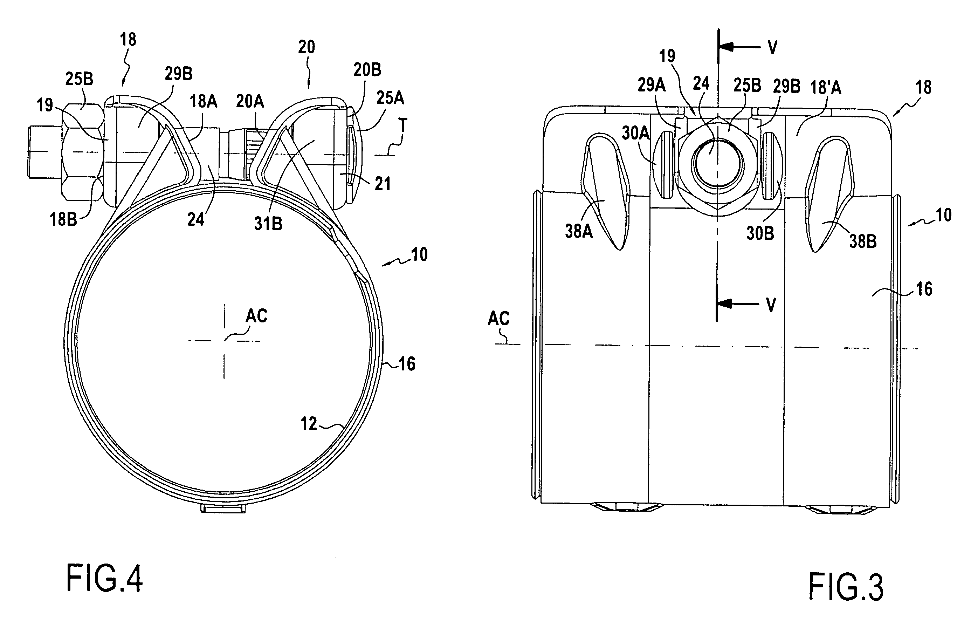

On voit encore que le dispositif comprend une tige de serrage 24 et deux organes de serrage, respectivement 25A et 25B (voir également les figures 4, 8 et 9) qui coopèrent avec cette tige de serrage pour le serrage du collier. En l'espèce, la tige de serrage 24 est la tige d'une vis filetée, dont la tête 25A constitue le premier organe de serrage, tandis que le deuxième organe de serrage 25B est constitué par un écrou qui coopère par vissage avec la partie filetée de la vis.

Les deux oreilles 18 et 20 sont en vis-à-vis, de part et d'autre de l'espace de serrage 22. Elles présentent ainsi chacune une partie avant, respectivement 18A et 20A qui, pour chaque oreille, est tournée vers l'autre oreille, c'est-à-dire vers l'espace de serrage 22. Elles présentent également chacune une partie d'appui, respectivement 18B et 20B, avec laquelle coopère un organe de serrage, respectivement 25B et 25A. Les parties d'appui sont disposées à l'arrière des oreilles, à l'opposé des parties avant 18A et 20A précitées.

Les deux oreilles 18 et 20 sont des oreilles à prolongement. Ceci signifie que, pour chaque oreille, la partie d'appui est formée dans un prolongement, respectivement 19 et 21, de l'oreille qui est replié vers l'arrière de l'oreille considérée, à l'opposé de l'autre oreille de la paire.

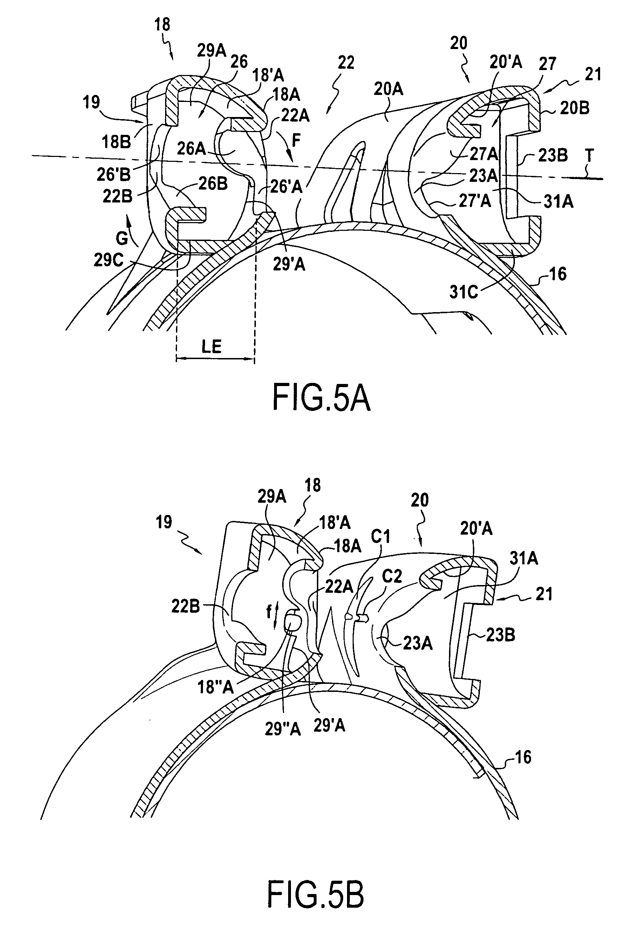

Pour le passage de la tige de serrage, la partie avant et la partie d'appui de chaque oreille présentent chacune un perçage, disposés en vis-à-vis. Ainsi, sur la figure 5A, on voit que la partie avant de l'oreille 18A présente un perçage 22A, tandis que sa partie d'appui présente un perçage 22B. De même, pour l'oreille 20, la partie avant 20A présente un perçage 23A, tandis que sa partie d'appui arrière présente un perçage 23B. Les perçages 22A, 22B, 23A et 23B sont alignés selon un diamètre de la ceinture, pour permettre le passage de la tige de serrage 24, disposée tangentiellement. En se référant en particulier à la figure 5A, on voit que, pour chaque oreille, un espace d'entretoisement, respectivement 26 pour l'oreille 18 et 27 pour l'oreille 20, est ménagé entre la partie avant de l'oreille et la partie d'appui formée dans le prolongement replié.

Sur la figure 5A, on voit également que, pour l'oreille 18, les perçages 22A et 22B présentent chacun une portion de bord ayant une visière, respectivement 26A et 26B qui s'étend dans l'espace d'entretoisement 26. De même, pour l'oreille 20, le perçage 23A présente également une portion de bord ayant une visière 27A, qui s'étend dans l'espace d'entretoisement 27. On voit que le perçage 23B est dépourvu de visière. Il pourrait toutefois en être équipé, comme le perçage 22B de l'oreille 18. Cependant, dans l'exemple représenté, ce perçage 23B présente un contour d'anti-rotation. On voit en effet que le contour de ce perçage présente plusieurs méplats (en l'espèce, il s'agit d'un contour carré) qui peuvent ainsi coopérer avec des méplats de la tige 24 pour bloquer celle-ci vis-à-vis d'une rotation autour de son axe. Le méplat ou toute forme anti-rotation est toutefois compatible avec la présence d'une visière. Par exemple, le méplat ou la forme anti-rotation peut être disposé à l'opposé d'une visière analogue à la visière 26B.

On voit que la visière 27A s'étend seulement sur une partie du contour du perçage 23A, une autre partie 27'A de ce contour étant simplement constituée par le bord du perçage découpé, dont l'épaisseur est égale à celle de la bande dans laquelle est réalisée la ceinture, et est dépourvue de visière. La visière 27A s'étend à distance de l'axe géométrique AC (voir figure 4) du collier, tandis que la partie du contour 27'A dépourvue de visière est plus proche de l'axe.

Si l'on s'intéresse à l'oreille 18, on voit que le perçage 22A présente une portion 26'A de son contour qui est dépourvue de visière, de même que le perçage 22B présente une portion 26'B de son contour qui est dépourvue de visière. Considérée selon l'axe T de la tige 24, la visière 26A s'étend en regard de la portion 26'B du perçage 22B, de même que la visière 26B s'étend en regard de la portion 26'A du contour du perçage 22A. En d'autres termes, les visières 26A et 26B sont décalées l'une par rapport à l'autre ou "en opposition de phase". Les visières 26A et 26B forment des portions de parois sensiblement cylindriques et s'étendent chacune sur une longueur L, mesurée parallèlement à l'axe T de la tige 24, comprise entre 20 et 50 % de la longueur LE de l'espace d'entretoisement 26 dans la zone de la visière considérée. Les bords des visières 26A et 26B sont courbés autour de l'axe T, pour se rapprocher progressivement de la portion 26'A ou 26'B dépourvue de visière.

On voit que la visière 26B du perçage du prolongement 19 est plus proche de l'axe AC de la ceinture que la visière 26A du perçage de la partie avant. On voit également que les visières sont des portions repliées des bords des perçages. On comprend que la coopération de la tige 24 avec la visière 26A tend à empêcher cette visière de se rapprocher de l'axe AC dans le sens F indiqué sur la figure 5A, et que, de même, la visière 26B peut coopérer avec cette tige 24 pour empêcher le prolongement de basculer dans le sens G indiqué également sur la figure 5A.

On voit encore que les prolongements 19 et 21 présentent chacun des ailes, respectivement 29A et 29B pour le prolongement 19, et 31A et 31B pour le prolongement 21. Pour chaque oreille, ces ailes coopèrent avec la face arrière, respectivement 18'A et 20'A de la partie avant de l'oreille. En particulier, sur la figure 5A, on voit que le bord libre 29'A de l'aile 29A est en appui contre la face arrière 18'A de la partie avant 18A de l'oreille 18.

Avantageusement, les ailes précitées sont formées par emboutissage dans le prolongement considéré. En fait, comme on le voit en particulier sur la figure 5A, les prolongements 19 et 21 présentent également une partie de base, respectivement 29C et 31C qui est orientée sensiblement parallèlement à l'axe T de la tige de serrage et qui est la partie du prolongement la plus proche de l'axe AC de la ceinture.

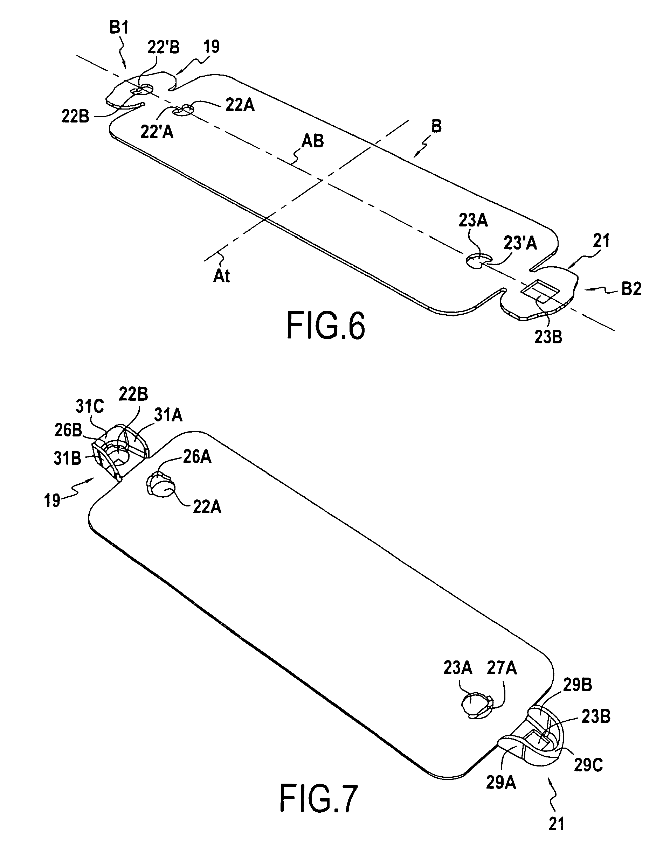

La figure 6 montre la bande B dans laquelle est réalisé le collier, à plat, avant son enroulement et l'emboutissage précité. On voit que les extrémités longitudinales B1 et B2 de cette bande sont découpées pour présenter les prolongements 19 et 21. Les perçages 22B et 23B sont respectivement découpés dans les prolongements 19 et 21. On voit également que les perçages 22A et 23A sont découpés dans la portion centrale de la bande B, respectivement à proximité de chacun des deux prolongements.

Le perçage 23B a une section carrée. En revanche, les perçages 22A, 22B et 23A ont une section sensiblement en haricot. Les courbures convexes des haricots sont orientées vers l'axe transversal médian At de la bande B. Plus précisément, les portions des contours des perçages tournées vers cet axe At sont en forme de portion de cercle. Les portions des pourtours des perçages éloignées de cet axe At présentent quant à elles une languette convexe, respectivement 22'A, 22'B et 23'A en saillie dans le perçage. Sur la figure 7, ces portions convexes en forme de languettes ont été déformées pour être orientées sensiblement perpendiculairement au plan de la bande et former les visières 26A, 26B et 27A des bords des pourtours des perçages. On voit également sur la figure 7, que les ailes des prolongements ont été embouties, en même temps que les portions de base de ces prolongements formées vers leurs extrémités libres. Les bords libres de ces ailes ont une forme adaptée à leur coopération avec les faces arrière des parties avant des oreilles, en tenant compte de la courbure de ces faces arrière.

En se référant à la figure 3, on constate que la face arrière 18'A de la partie avant de l'oreille 18 présente des nervures, respectivement 30A et 30B, qui sont orientées selon l'axe longitudinal AB (voir figure 6) de la bande B. Les ailes 29A et 29B du prolongement 19 de l'oreille sont retenues entre ces nervures 30A et 30B, qui les empêchent de s'écarter l'une de l'autre.

La face arrière 20'B de l'autre oreille 20 est équipée de nervures analogues pour retenir également les ailes 31A et 31B vis-à-vis de leur écartement.

La figure 5B montre une variante de réalisation dans laquelle, en outre, les ailes sont également retenues vis-à-vis de leur glissement contre la face arrière de l'oreille dans un plan sensiblement perpendiculaire à l'axe AC de la ceinture. Ce plan est donc parallèle au plan dans lequel est réalisée la coupe de la figure 4. La conformation permettant cette retenue est mieux visible pour l'oreille 18 de la figure 5B. On voit sur cette figure que le bord libre 29'A de l'aile 29A présente une encoche 29"A et que la face arrière 18'A de la partie avant 18A de l'oreille présente une saillie 18"A engagée dans cette encoche. On comprend que cette conformation empêche un glissement relatif entre le bord libre de l'oreille et la face arrière 18'A dans le sens de la double flèche f indiquée sur la figure 5B.

Comme les nervures 30A et 30B précitées, la saillie 18"A peut être formée par emboutissage à partir de la partie avant de l'oreille considérée. On voit ainsi, pour l'oreille 20, la forme emboutie en creux C1 de la partie avant de l'oreille qui, sur sa face arrière, forme l'une des nervures empêchant l'écartement des ailes du prolongement et la forme emboutie en creux C2 qui, sur cette même face arrière, forme la saillie apte à coopérer avec une encoche du bord libre de l'aile 31A.

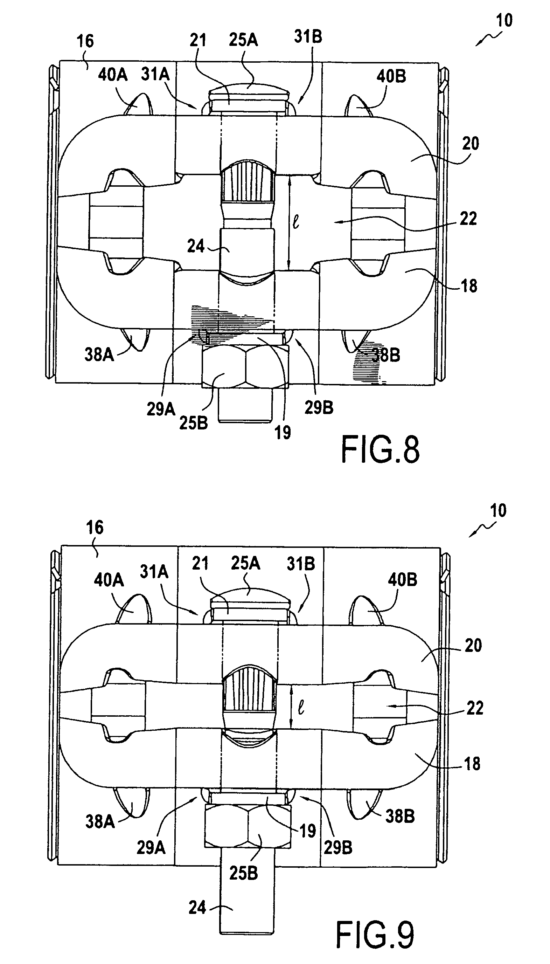

On s'intéresse maintenant à un autre aspect du dispositif de serrage selon l'invention, qui est la courbure des parties avant des oreilles permettant de réaliser un effet "clé de voûte" favorisant la répartition des efforts de serrage. Sur la figure 8, qui montre l'état du dispositif avant le serrage du collier, on voit que l'espace de serrage 22 présente une largeur I, mesurée selon la direction longitudinale de la tige de serrage 24, qui est plus grande autour de cette tige que dans les régions des oreilles éloignées de la tige en question. En revanche, sur la figure 9, qui montre l'état du dispositif après serrage du collier, on voit que la largeur I de l'espace 22 est sensiblement constante dans toute la région centrale des oreilles, exception faite des creux occasionnés par les nervures de renfort 38A et 38B de l'oreille 18, qui sont embouties à partir de la partie avant de cette oreille et sont donc en saillie sur sa face arrière, et par les nervures 40A et 40B, réalisées de la même manière pour l'oreille 20. Cette exception au fait que la largeur I soit sensiblement constante est également valable pour les parties d'extrémités des oreilles, les plus éloignées de la tige de serrage, mais, comme on le verra dans la suite, ceci concerne uniquement la base des oreilles, dans leur portion de raccordement à la ceinture.

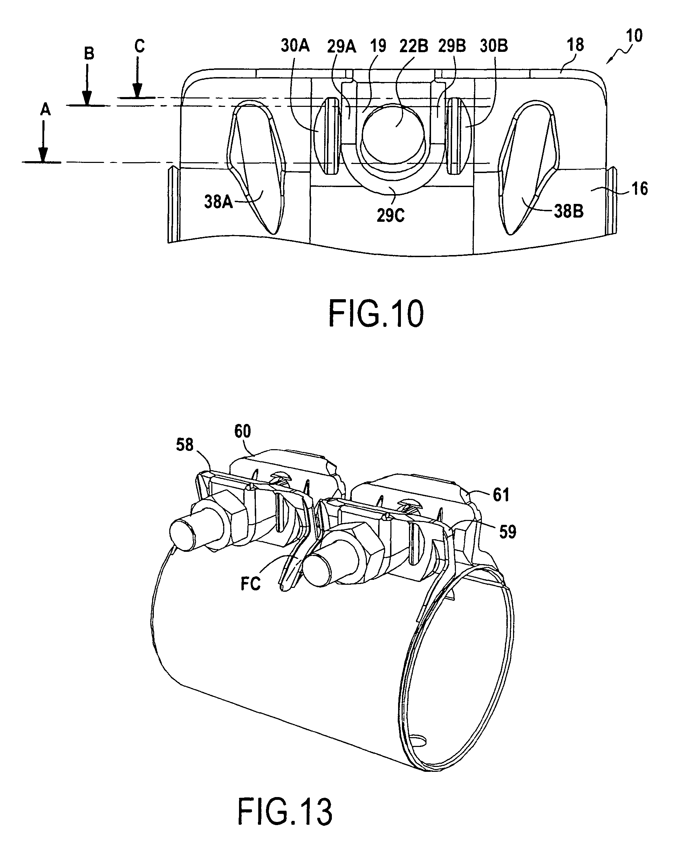

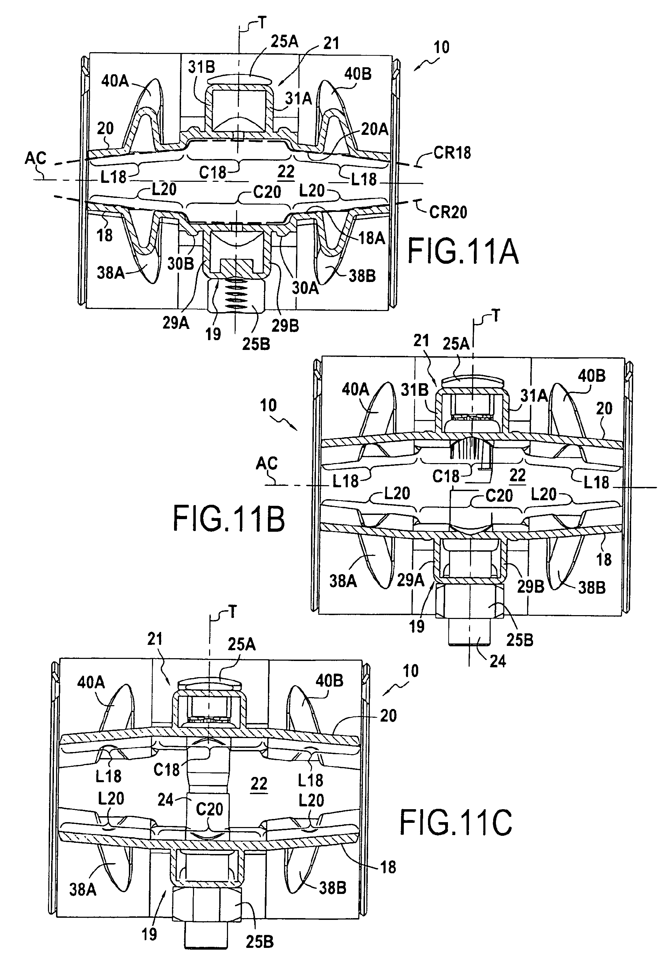

Pour mieux illustrer cette configuration particulière du dispositif de serrage, on a réalisé plusieurs coupes dans les plans A, B, C indiqués sur la figure 10, aussi bien à l'état serré qu'à l'état non serré du collier. La situation avant le serrage du collier est ainsi illustrée par les figures 11A, 11B et 11C correspondant respectivement à chacun des plans de coupes A, B et C. Ces coupes sont chacune réalisées dans un plan parallèle à l'axe AC de la ceinture et passant par l'axe T de la tige de serrage, le plan A passant par le bord inférieur du perçage 22B, le plus proche de l'axe AC, le plan B passant par le bord supérieur opposé du perçage 22B, et le plan C étant situé très légèrement au-delà du plan B en s'éloignant de l'axe AC. La hauteur de la tige de serrage est donc délimitée entre les plans A et B.

Les trois plans A, B et C sont des plans de concavité, dans lesquels l'intersection de l'oreille 18 ou 20 avec ce plan coopère sur la majeure partie de sa longueur avec une courbe de référence concave, respectivement CR18 pour l'oreille 18 et CR20 pour l'oreille 20, dont le creux est situé dans la région de la tige de serrage qui, sur ces figures, est matérialisé par son axe T.

En considérant les figures 11A et 11B, entre lesquelles s'étend la hauteur de la tige de serrage 24, mesurée perpendiculairement à l'axe AC de la ceinture et la direction longitudinale de cette tige (selon l'axe T), on voit que des parties avant 18A et 20A des oreilles présentent chacune une portion centrale, respectivement C18 et C20 et deux portions latérales, respectivement L18 et L20 qui ont des formes telles que les portions latérales sont en avancée vers l'oreille opposée par rapport à la portion centrale au moins sur la hauteur de la tige. En fait, la longueur des portions centrales C18 et C20 mesurées selon l'axe AC de la ceinture correspond à environ 1/3 de la partie avant de l'oreille considérée, de même que les longueurs de chacune des portions latérales correspondent à environ 1/3 de la longueur de l'oreille considérée. Globalement, la ceinture est symétrique par rapport à un plan radial passant par l'axe T. En l'espèce, comme on le voit sur la figure 11A, les portions centrales sont sensiblement rectilignes, tandis que les portions latérales sont inclinées de telle sorte que leurs bords d'extrémité, opposés à la portion centrale, soient plus proches de l'oreille opposée que leurs portions de raccordement à la portion centrale. Dans la région du raccordement à la portion centrale, on voit, sur la coupe de la figure 11A correspondant au bas des perçages 22A et 23A, que les courbes CR18 et CR20 présentent les zones d'inflexion. Ces inflexions s'estompent lorsque l'on s'éloigne de l'axe AC de la ceinture et l'on voit qu'elles ont disparu sur les coupes des figures 11B et 11C.

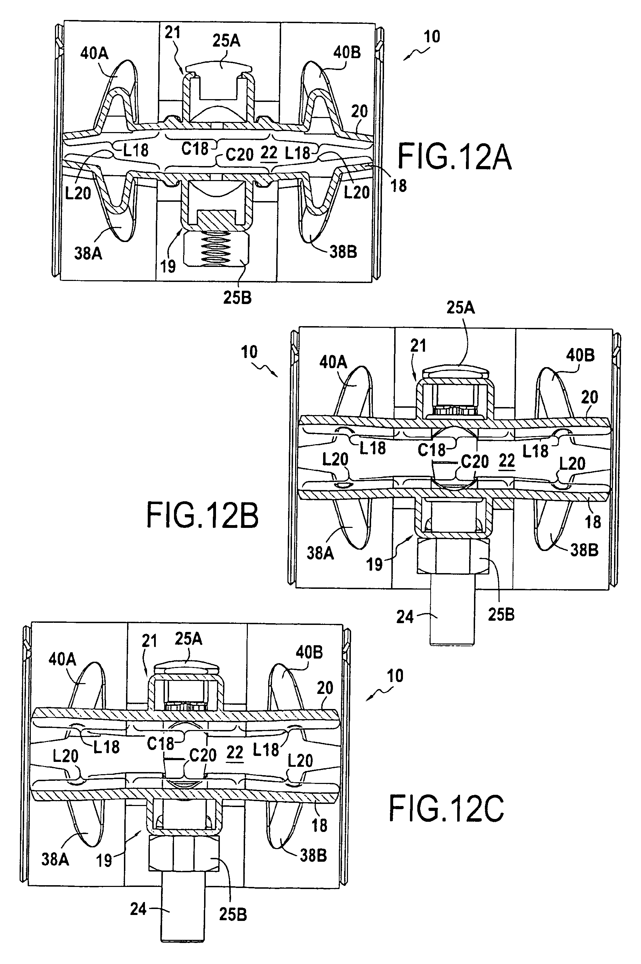

Si l'on considère maintenant la situation à l'état serré du collier, en se référant aux figures 12A, 12B et 12C, on voit que les courbes CR18 et CR20 se sont redressées pour perdre leur concavité. C'est en particulier le cas sur les figures 12B et 12C, dans les plans de coupe correspondant aux bords supérieurs des perçages 22A et 23A et à une région légèrement au-dessus de ces bords supérieurs. Sur la figure 12A, la coupe est réalisée dans les bas des perçages 22A et 23A, à proximité immédiate du raccordement des oreilles à la partie sensiblement cylindrique de la ceinture, et l'on voit que, dans cette région, les portions latérales L18 et L20 ont gardé une légère inclinaison rapprochant leurs extrémités libres de l'oreille opposée. En effet, immédiatement à la base des oreilles, celles-ci présentent, dans les régions écartées de leurs perçages respectifs, des portions en avancée favorisant une continuité d'appui de la ceinture sur l'objet à serrer. En revanche, sur les coupes des figures 12B et 12C, les oreilles sont pratiquement rectilignes et les portions latérales L18 et L20 tendent même à légèrement s'écarter de l'oreille opposée vers leurs bords libres. En fait, l'avancée des bords des portions latérales 18 et 20 s'estompe progressivement lorsqu'on s'éloigne de la ceinture pour disparaître sensiblement à mi-hauteur de la tige de serrage.

L'effet "clé de voûte" dû à la conformation particulière des oreilles de serrage est particulièrement utile pour homogénéiser les efforts de serrage lorsque la ceinture présente une longueur importante mesurée selon l'axe AC de cette ceinture.

Comme on le voit sur la figure 13, une autre façon d'homogénéiser les efforts de serrage pour des ceintures de grande longueur consiste à équiper le collier de plusieurs paires d'oreilles disposées successivement suivant cette longueur. Ainsi, sur la figure 13, on voit deux paires d'oreilles, respectivement 50 et 60 d'une part et 59 et 61 d'autre part qui sont juxtaposées dans le sens de la longueur de l'axe. Pour chaque paire d'oreilles, le système de serrage comprend une tige de serrage et des organes de serrage conformes à ceux du type précité. On voit également que chaque oreille présente une conformation analogue aux oreilles précédemment décrites en ce que les faces arrière de leur partie avant présentent des nervures de calage pour les ailes des prolongements. Pour serrer chaque équipement de serrage indépendamment l'un de l'autre, la ceinture présente une fente FC entre les paires d'oreilles juxtaposées. Bien entendu, le fait d'utiliser plusieurs paires d'oreilles de serrage juxtaposées n'empêche pas de réaliser chaque oreille avec un effet clé de voûte, en leur conférant une forme concave sur toute la hauteur de la tige de serrage qui passe à travers elles. Les perçages des oreilles du collier de la figure 13 peuvent évidemment présenter des visières analogues aux visières 26A, 26B et 27A précitées.

## Revendications

1. Dispositif de serrage comprenant un collier (10) susceptible d'être placé autour d'objets à serrer, le collier présentant une ceinture métallique (16) sensiblement cylindrique, au moins une paire d'oreilles (18, 20) qui sont en saillie par rapport à cette ceinture et qui délimitent un espace de serrage (22) entre leurs parties avant respectives (18A, 20A), et au moins une tige de serrage (24) et deux organes de serrage (25A, 25B) coopérant avec ladite tige et, respectivement, avec des parties d'appui (18B, 20B) des deux oreilles de la paire, pour pouvoir rapprocher ces oreilles de manière à provoquer le serrage de la ceinture par une diminution du diamètre de cette dernière, au moins l'une des oreilles de la paire étant une oreille à prolongement (18), la partie d'appui (18B) de cette oreille étant formée dans un prolongement (19) de ladite oreille, qui est replié vers l'arrière de cette dernière, à l'opposé de l'autre oreille de la paire, et qui présente un perçage (22B) pour la tige de serrage (24) situé en regard d'un perçage (22A) de la partie avant de la même oreille, un espace d'entretoisement (26) étant ménagé entre le prolongement replié et ladite partie avant,
**caractérisé en ce que** les perçages (22B, 22A) du prolongement (19) et de la partie avant (18A) présentent chacun une portion de bord ayant une visière (26B, 26A) qui s'étend dans l'espace d'entretoisement (26) et une portion de bord (26'B, 26'A) dépourvue de visière, qui s'étend en regard de la visière de l'autre perçage.

2. Dispositif selon la revendication 1, **caractérisé en ce que** les visières (26A, 26B, 27A) sont des portions repliées des bords des perçages.

3. Dispositif selon la revendication 1 ou 2, **caractérisé en ce que** la visière (26B) du perçage (22B) du prolongement (19) est plus proche de l'axe (AC) de la ceinture (16) que la visière (26A) du perçage (22A) de la partie avant (20A).

4. Dispositif selon l'une quelconque des revendications 1 à 3, **caractérisé en ce que** l'autre oreille de la paire est également une oreille à prolongement (20), la partie d'appui (20B) de cette oreille étant formée dans un prolongement (21) de ladite oreille, qui est replié vers l'arrière de cette dernière, à l'opposé de l'autre oreille (18) de la paire, et qui présente un perçage (23B) pour la tige de serrage (24) situé en regard d'un perçage (23A) de la partie avant (20A) de la même oreille (20), un espace d'entretoisement (27) étant ménagé entre le prolongement replié et ladite partie avant.

5. Dispositif selon la revendication 4, **caractérisé en ce que** au moins le perçage (23A) de la partie avant (20A) de ladite autre oreille (20) de la paire présente une portion de bord ayant une visière (27A) s'étendant seulement sur une partie du pourtour dudit perçage.

6. Dispositif selon la revendication 3 ou 4, **caractérisé en ce que** le perçage (23B) de la partie d'appui (20B) de ladite autre oreille (20) de la paire présente un contour d'anti-rotation.

7. Dispositif selon l'une quelconque des revendications 1 à 6, **caractérisé en ce que**, à l'état non serré du collier, la largeur (I) de l'espace de serrage (22), mesurée selon la direction longitudinale de la tige de serrage (24), est plus grande autour de cette tige que dans des régions des oreilles (18, 20) éloignées de la tige de serrage sur au moins sensiblement toute la hauteur de la tige de serrage, mesurée perpendiculairement à l'axe de la ceinture et à la direction longitudinale de ladite tige.

8. Dispositif selon la revendication 7, **caractérisé en ce que**, vue dans un plan (A, B, C) parallèle à l'axe (AC) de la ceinture et passant par l'axe de la tige de serrage (24), chaque oreille (18, 20) de ladite paire présente, à l'état non serré de la ceinture, une forme concave dont la concavité est tournée vers l'autre oreille de la paire.

9. Dispositif selon la revendication 7 ou 8, **caractérisé en ce qu'**il existe au moins un plan de concavité (A, B, C), parallèle à l'axe (AC) de la ceinture et à la direction longitudinale de la tige de serrage, dans lequel l'intersection d'une oreille de la paire avec ce plan coïncide sur la majeure partie de sa longueur avec une courbe de référence concave (CR18, CR20), dont le creux est situé dans la région de la tige de serrage.

10. Dispositif selon l'une quelconque des revendications 7 à 9, **caractérisé en ce que** les parties avant (18A, 20A) des deux oreilles (18, 20) de la paire présentent chacune une portion centrale (C18, C20), et deux portions latérales (L18, L20) qui s'étendent sur au moins la hauteur de la tige de serrage, mesurée perpendiculairement à l'axe (AC) de la ceinture et à la direction longitudinale de ladite tige, et qui ont des formes telles que les portions latérales soient en avancée vers l'oreille opposée par rapport à la portion centrale au moins sur ladite hauteur de la tige de serrage.

11. Dispositif selon la revendication 10, **caractérisé en ce que**, pour chaque oreille de la paire, ladite portion centrale (C18, C20) et lesdites portions latérales (L18, L20) s'étendent chacune sur environ 1/3 de la longueur de la partie avant (18A, 20A) de l'oreille considérée, ladite longueur étant mesurée selon l'axe (AC) de la ceinture.

12. Dispositif selon l'une quelconque des revendications 1 à 11, **caractérisé en ce que** le prolongement (19, 21) présente des ailes (29A, 298, 31A, 31B) coopérant avec la face arrière (18'A, 20'A) de la partie avant (18A, 20A) de l'oreille prolongée (18, 20), de part et d'autre du perçage (22A, 23A) de ladite partie avant.

13. Dispositif selon la revendication 12, **caractérisé en ce que** les ailes (29A, 29B, 31A, 31B) sont formées par emboutissage dans le prolongement (19, 21).

14. Dispositif selon la revendication 12 ou 13, **caractérisé en ce que** les ailes (29A, 29B, 31A, 31B) du prolongement (19, 21) sont retenues vis-à-vis de leur écartement relatif.

15. Dispositif selon l'une quelconque des revendications 12 à 14, **caractérisé en ce que** au moins une aile (29A, 29B, 31A, 31B) du prolongement (19, 21) est retenue vis-à-vis de son glissement contre la face arrière (18'A, 20'A) de l'oreille (18, 20) dans un plan sensiblement perpendiculaire à l'axe (AC) de la ceinture (16).

16. Dispositif selon la revendication 15, **caractérisé en ce que** l'un des éléments constitués par le bord libre (29'A) de l'aile (29A) retenue vis-à-vis de son glissement contre la face arrière (18'A) de l'oreille (18) dans un plan sensiblement perpendiculaire à l'axe de la ceinture et par la face arrière (18'A) de la partie avant (18A) de l'oreille (18) présente une encoche (29"A), tandis que l'autre élément présente une saillie (18"A) engagée dans cette encoche.

## Claims

1. A clamping device comprising a collar (10) suitable for being placed around objects to be clamped, the collar having a substantially cylindrical metal belt (16), at least one pair of lugs (18, 20) that project relative to said belt and that define a tightening space (22) between their respective front portions (18A, 20A), and at least one tightening rod (24) and two tightening members (25A, 25B) co-operating with said rod, and with respective ones of bearing portions (18B, 20B) of the two lugs of the pair, so as to bring the lugs together in such a manner as to cause the belt to be tightened by reducing its diameter, at least one of the lugs of the pair being a lug (18) having an extension, the bearing portion (18B) of which lug is formed in an extension (19) of said lug, which extension is folded back towards the back of said lug, away from the other lug of the pair, and is provided with a hole (22B) for receiving the tightening rod (24) and that is situated facing a hole (22A) in the front portion of the same lug, a bracing space (26) being provided between the folded-back extension and said front portion;
said clamping device being **characterized in that** each of the holes (22B, 22A) in the extension (19) and in the front portion (18A) has an edge portion provided with a visor (26B, 26A) that extends into the bracing space (26), and an edge portion (26'B, 26'A) that is not provided with a visor and that extends facing the visor of the other hole.

2. A device according to claim 1, **characterized in that** the visors (26A, 26B, 27A) are folded-back portions of the edges of the holes.

3. A device according to claim 1 or claim 2, **characterized in that** the visor (26B) of the hole (22B) in the extension (19) is closer to the axis (AC) of the belt (16) than the visor (26A) of the hole (22A) of the front portion (20A).

4. A device according to any one of claims 1 to 3, **characterized in that** the other lug of the pair is also a lug (20) having an extension, the bearing portion (20B) of which lug is formed in an extension (21) of said lug, which extension is folded back towards the back of said lug, away from the other lug (18) of the pair, and is provided with a hole (23B) for receiving the tightening rod (24) and that is situated facing a hole (23A) in the front portion (20A) of the same lug (20), a bracing space (27) being provided between the folded-back extension and said front portion.

5. A device according to claim 4, **characterized in that** at least the hole (23A) in the front portion (20A) of said other lug (20) of the pair has an edge portion provided with a visor (27A) extending over only a portion of the periphery of said hole.

6. A device according to claim 3 or claim 4, **characterized in that** the hole (23B) of the bearing portion (20B) of said other lug (20) of the pair has an anti-rotation outline.

7. A device according to any one of claims 1 to 6, **characterized in that**, when the collar is in the non-tightened state, the width (ℓ) of the bracing space (22), as measured in the longitudinal direction of the tightening rod (24), is greater around said rod than in regions of the lugs (18, 20) that are remote from the tightening rod over at least substantially the entire height of the tightening rod, as measured perpendicularly to the axis of the belt and to the longitudinal direction of said rod.

8. A device according to claim 7, **characterized in that**, seen in a plane (A, B, C) parallel to the axis (AC) of the belt, and containing the axis of the tightening rod (24), and when the belt is in the non-tightened state, each lug (18, 20) of said pair has a concave shape, the concave side of which faces towards the other lug of the pair.

9. A device according to claim 7 or claim 8, **characterized in that** there exists at least one plane (A, B, C) of concavity that is parallel to the axis (AC) of the belt and to the longitudinal direction of the tightening rod, in which plane the intersection via which a lug of the pair intersects with said plane coincides, over most of its length with a concave reference curve (CR18, CR20), whose trough lies in the region of the tightening rod.

10. A device according to any one of claims 7 to 9, **characterized in that** each of the front portions (18A, 20A) of the two lugs (18, 20) of the pair has a central portion (C18, C20), and two side portions (L18, L20) that extend over at least the height of the tightening rod, as measured perpendicularly to the axis (AC) of the belt and to the longitudinal direction of said rod, and that have shapes such that the side portions protrude towards the opposite lug relative to the central portion at least over said height of the tightening rod.

11. A device according to claim 10, **characterized in that**, for each lug of the pair, said central portion (C18, C20) and each of said side portions (L18, L20) extends over about 1/3 of the length of the front portion (18A, 20A) of the lug in question, said length being measured along the axis (AC) of the belt.

12. A device according to any one of claims 1 to 11, **characterized in that** the extension (19, 21) has flanges (29A, 29B, 31A, 31B) co-operating with the back face (18'A, 20'A) of the front portion (18A, 20A) of the extended lug (18, 20), on either side of the hole (22A, 23A) of said front portion.

13. A device according to claim 12, **characterized in that** the flanges (29A, 29B, 31A, 31B) are formed by stamping the extension (19, 21).

14. A device according claim 12 or 13, **characterized in that** the flanges (29A, 29B, 31A, 31B) of the extension (19, 21) are retained so as to prevent them from moving apart.

15. A device according to any one of claims 12 to 14, **characterized in that** at least one flange (29A, 29B, 31A, 31B) of the extension (19, 21) is retained so as to prevent it from sliding against the back face (18'A, 20'A) of the lug (18, 20) in a plane substantially perpendicular to the axis (AC) of the belt (16).

16. A device according to claim 15, **characterized in that** one of the elements constituted by the free edge (29'A) of the flange (29A) retained so as to prevent it from sliding against the back face (18'A) of the lug (18) in a plane that is substantially perpendicular to the axis of the belt, and by the back face (18'A) of the front portion (18A) of the lug (18) is provided with a notch (29"A), while the other element is provided with a projection (18"A) engaged in said notch.

## Patentansprüche

1. Klemmvorrichtung umfassend eine Schelle (10), die geeignet ist, um festzuklemmende Gegenstände herum angeordnet zu werden, wobei die Schelle einen im wesentlichen zylindrischen Metallring (16), wenigstens ein Paar Ösen (18, 20), die gegenüber diesem Ring vorspringen und die einen Klemmraum (22) zwischen ihren jeweiligen vorderen Teilen (18A, 20A) begrenzen, sowie wenigstens einen Klemmstift (24) und zwei Klemmorgane (25A, 25B) umfaßt, die mit dem Stift bzw. mit Anlageteilen (18B, 20B) der beiden Ösen des Paars zusammenwirken, um diese Ösen nähern zu können, um das Festklemmen des Rings durch eine Verringerung seines Durchmessers zu bewirken, wobei wenigstens eine der Ösen des Paars eine Öse mit Verlängerung (18) ist, wobei das Anlageteil (18B) dieser Öse in einer Verlängerung (19) der Öse gebildet ist, die zu deren hinteren Teil, entgegengesetzt zu der anderen Öse des Paars umgebogen ist und die eine Bohrung (22B) für den Klemmstift (24) aufweist, die gegenüber einer Bohrung (22A) des vorderen Teils der gleichen Öse gelegen ist, wobei ein Distanzraum (26) zwischen der umgebogenen Verlängerung und dem vorderen Teil ausgebildet ist,
**dadurch gekennzeichnet, daß** die Bohrungen (22B, 22A) der Verlängerung (19) und des vorderen Teils (18A) jeweils einen Randabschnitt mit einem Visier (26B, 26A), das sich in den Distanzraum (26) erstreckt, und einen Randabschnitt (26'B, 26'A) ohne Visier, der sich gegenüber dem Visier der anderen Bohrung erstreckt, aufweisen.

2. Vorrichtung nach Anspruch 1, **dadurch gekennzeichnet, daß** die Visiere (26A, 26B, 27A) umgebogene Abschnitte der Ränder der Bohrungen sind.

3. Vorrichtung nach Anspruch 1 oder 2, **dadurch gekennzeichnet, daß** das Visier (26B) der Bohrung (22B) der Verlängerung (19) der Achse (AC) des Rings (16) näher ist als das Visier (26A) der Bohrung (22A) des vorderen Teils (20A).

4. Vorrichtung nach einem der Ansprüche 1 bis 3, **dadurch gekennzeichnet, daß** die andere Öse des Paars ebenfalls eine Öse mit Verlängerung (20) ist, wobei das Anlageteil (20B) dieser Öse in einer Verlängerung (21) der Öse gebildet ist, die zu deren hinteren Teil, entgegengesetzt zu der anderen Öse (18) des Paars umgebogen ist und die eine Bohrung (23B) für den Klemmstift (24) aufweist, die gegenüber einer Bohrung (23A) des vorderen Teils (20A) der gleichen Öse (20) gelegen ist, wobei ein Distanzraum (27) zwischen der umgebogenen Verlängerung und dem vorderen Teil ausgebildet ist.

5. Vorrichtung nach Anspruch 4, **dadurch gekennzeichnet, daß** wenigstens die Bohrung (23A) des vorderen Teils (20A) der anderen Öse (20) des Paars einen Randabschnitt mit einem Visier (27A) aufweist, das sich lediglich über einen Teil des Umfangs der Bohrung erstreckt.

6. Vorrichtung nach Anspruch 3 oder 4, **dadurch gekennzeichnet, daß** die Bohrung (23B) des Anlageteils (20B) der anderen Öse (20) des Paars eine Verdrehsicherungskontur aufweist.

7. Vorrichtung nach einem der Ansprüche 1 bis 6, **dadurch gekennzeichnet, daß** im nicht festgeklemmten Zustand der Schelle die Breite (I) des Klemmraums (22), in Längsrichtung des Klemmstifts (24) gemessen, über wenigstens im wesentlichen die gesamte Höhe des Klemmstifts, senkrecht zur Achse des Rings und zur Längsrichtung des Stifts gemessen, um diesen Stift herum größer ist als in von dem Klemmstift entfernten Bereichen der Ösen (18, 20).

8. Vorrichtung nach Anspruch 7, **dadurch gekennzeichnet, daß** in einer parallel zur Achse (AC) des Rings und durch die Achse des Klemmstifts (24) verlaufenden Ebene (A, B, C) betrachtet jede Öse (18, 20) des Paars im nicht festgeklemmten Zustand des Rings eine konkave Form aufweist, deren Konkavität der anderen Öse des Paars zugewandt ist.

9. Vorrichtung nach Anspruch 7 oder 8, **dadurch gekennzeichnet, daß** wenigstens eine Konkavitätsebene (A, B, C), die zu der Achse (AC) des Rings und zur Längsrichtung des Klemmstifts parallel verläuft, vorhanden ist, in welcher der Schnittpunkt einer Öse des Paars mit dieser Ebene über den überwiegenden Teil ihrer Länge mit einer konkaven Bezugskurve (CR18, CR20) übereinstimmt, deren Tal im Bereich des Klemmstifts liegt.

10. Vorrichtung nach einem der Ansprüche 7 bis 9, **dadurch gekennzeichnet, daß** die vorderen Teile (18A, 20A) der beiden Ösen (18, 20) des Paars jeweils einen mittleren Abschnitt (C18, C20) und zwei Seitenabschnitte (L18, L20) aufweisen, die über wenigstens die Höhe des Klemmstifts, senkrecht zur Achse (AC) des Rings und zur Längsrichtung des Stifts gemessen, verlaufen, und die Formen aufweisen, welche derart sind, daß die Seitenabschnitte, wenigstens über die Höhe des Klemmstifts, gegenüber dem mittleren Abschnitt zur gegenüberliegenden Öse vorspringen.

11. Vorrichtung nach Anspruch 10, **dadurch gekennzeichnet, daß** für jede Öse des Paars der mittlere Abschnitt (C18, C20) und die Seitenabschnitte (L18, L20) sich jeweils über etwa 1/3 der Länge des vorderen Teils (18A, 20A) der betrachteten Öse erstrecken, wobei die Länge entlang der Achse (AC) des Rings gemessen wird.

12. Vorrichtung nach einem der Ansprüche 1 bis 11, **dadurch gekennzeichnet, daß** die Verlängerung (19, 21) Schenkel (29A, 29B, 31 A, 31 B) aufweist, die mit der Rückseite (18'A, 20'A) des vorderen Teils (18A, 20A) der verlängerten Öse (18, 20) auf beiden Seiten der Bohrung (22A, 23A) des vorderen Teils zusammenwirken.

13. Vorrichtung nach Anspruch 12, **dadurch gekennzeichnet, daß** die Schenkel (29A, 29B, 31 A, 31 B) durch Tiefziehen in der Verlängerung (19, 21) ausgebildet sind.

14. Vorrichtung nach Anspruch 12 oder 13, **dadurch gekennzeichnet, daß** die Schenkel (29A, 29B, 31 A, 31 B) der Verlängerung (19, 21) an ihrem Relativspreizen gehindert werden.

15. Vorrichtung nach einem der Ansprüche 12 bis 14, **dadurch gekennzeichnet, daß** wenigstens ein Schenkel (29A, 29B, 31 A, 31 B) der Verlängerung (19, 21) an seinem Gleiten an der Rückseite (18'A, 20'A) der Öse (18, 20) in einer zu der Achse (AC) des Rings (16) im wesentlichen senkrechten Ebene gehindert wird.

16. Vorrichtung nach Anspruch 15, **dadurch gekennzeichnet, daß** eines der Elemente, die durch den freien Rand (29'A) des Schenkels (29A), welcher an seinem Gleiten an der Rückseite (18'A) der Öse (18) in einer zu der Achse des Rings im wesentlichen senkrechten Ebene gehindert wird, und durch die Rückseite (18'A) des vorderen Teils (18A) der Öse (18) gebildet sind, eine Nut (29"A) aufweist, während das andere Element einen in diese Nut eingesteckten Vorsprung (18"A) aufweist.
